# EUROPEAN PATENT SPECIFICATION

(11) **EP 1 943 504 B1**
(45) Date of publication and mention of the grant of the patent: **08.09.2010**
(21) Application number: 06827410.9
(22) Date of filing: 02.11.2006
(51) Int. Cl.: G01N 21/952, G01N 21/88

(54) **ILLUMINATOR FOR CYLINDRICAL CURVED SURFACES**
BELEUCHTUNGSVORRICHTUNG FÜR GEKRÜMMTE ZYLINDEROBERFLÄCHEN
ILLUMINATEUR POUR SURFACES CYLINDRIQUES INCURVEES

(30) Priority: 02.11.2005 US 732853 P; 01.11.2006 US 591343
(43) Date of publication of application: 16.07.2008
(73) Proprietor: Microscan Systems, Inc., Renton, WA 98057 (US)
(72) Inventor: DUNN, Sheila, Bergeron, Mason, NH 03048 (US); LAFLAMME, Joseph, Marcel, New Boston, NH 03070 (US); MESSINA, Michael, C., Hooksett, NH 03106 (US)
(74) Representative: MERH-IP Matias Erny Reichl Hoffmann
(86) International application number: PCT/US2006/042865
(87) International publication number: WO 2007/056090

(56) References cited:
- WO-A-97/00438
- GB-A- 2 057 675
- GB-A- 2 155 630
- GB-A- 2 249 169
- JP-A- 2004 085 204
- US-A- 5 175 428

## Description

### BACKGROUND OF THE INVENTION - FIELD OF APLICATION

This invention relates to illumination of curved surfaces; and more particularly to illumination of round, reflective, cylindrical parts of curved surfaces.

### BACKGROUND OF THE INVENTION - DESCRIPTION OF THE PRIOR ART

It is often necessary in Machine Vision to light or illuminate round, reflective, cylindrical parts of curved surfaces evenly enough to read date and lot codes and other symbology such as data matrix marks, or to be able to inspect such parts for flaws like: gouges; dents; scratches; etc. Some illumination devices, particularly those commonly referred to as continuous diffuse illuminators (CDI): are shown, and described, by way of example in US Patent 5,461,417 patented to T. P. White, et al on October 24, 1998 for "Continuous Diffuse Illumination Method and Apparatus". Other similar illuminators are shown and described, for example, in other ones of US Patents to T. P. White under US Patents numbered 5,539,485; 5,604,550; 5,684,530; and 5,713,661 respectively.

Other CDI's, and quoted light sources, that may provide uniform illumination of curved surfaces typically require a complex structure of multiple lighting sources and optical elements like beamsplitters, reflecting domes and light blocks. They may also dictate a rigid camera location.
Patent document GB2057675A describes a photoelectric detection system for surface defects using sources of diffused light where illuminators are positioned directly above the pellet, i.e. the article to be illuminated, to generate diffused light. JP2004085204 describes a buckling inspection device which comprises a plurality of light sources of different colors for generating linear illuminating light.

### SUMMARY OF THE INVENTION

The present invention provides an illuminator for cylindrical curved surfaces according to claim 1 that illuminates the curved surface evenly.

Furthermore, the present invention provides illuminators for cylindrical curved surfaces that illuminate the curved surface evenly with respect to a viewing camera.

Furthermore, the present invention provides illuminators for cylindrical curved surfaces that illuminate the curved surface evenly with respect to a viewing camera while still maintaining a brightfield viewing effect.

Furthermore, the present invention provides illuminators for cylindrical curved surfaces that illuminate the curved surface evenly with respect to a viewing camera while facilitating flexible and non complex mounting of the camera and/or cameras while allowing some flexibility in camera positioning.

Furthermore, the present invention provides illuminators that provide a relatively wide semicircle of diffused light with uniform lighting to cover up to 180 degrees of a surface such that light rays reflect off that surface and back to a camera/lens combination and result in a uniform "even" image.

Furthermore, the present invention provides illuminators for cylindrical curved surfaces that illuminate the curved surface evenly, are relatively of low cost, and have a relatively small footprint.

Furthermore, the present invention provides illuminators that eliminate the need for items such as dual light sources, beam splitters, reflecting domes and light blocks otherwise used in CDI's.

The present invention also provides a method to facilitate illumination of cylindrical curved surfaces according to claim 10.

Other features and advantages of the invention in its details of construction and arrangement of elements and systems will be seen from the above and from the following description of the preferred embodiments when considered in conjunction with the accompanying drawings and appended claims.

### BREIF DESCRIPTION OF THE DRAWINGS

In the drawings:

FIG. 1 is an elevation view of a face an end view of an illuminator, incorporating the instant invention, positioned over a cylindrical curved part;

FIG. 2 is an isometric sketch of the illuminator and cylindrical part of Fig.1;

FIG. 3 is a side elevation view, in partial section of the illuminator and cylindrical part, taken on line 3-3, of Figs. 1 , enlarged to better show details thereof and with a lens and camera schematically disposed to receive a reflection from the cylindrical part when illuminated;

FIG. 4 is a side elevation view of the illuminator and cylindrical part of Fig. 3 reversed with respect to the showing in Fig. 3;

FIG. 5 is a front elevation view of an alternative embodiment of illuminator, incorporating the instant invention, with a cylindrical part schematically shown to be illuminated thereby;

Fig. 6 is a side elevation view, in partial section, of the illuminator and cylindrical part, taken on line 6-6, of Figs. 5, with a lens and camera schematically disposed to receive a reflection from the cylindrical part when illuminated;

Fig. 7 is a front elevation view of an alternative embodiment of illuminator, incorporating the instant invention, with a cylindrical part schematically shown to be illuminated thereby; and

Fig. 8 is a side elevation view, in partial section, of yet another embodiment of illuminator incorporating the instant invention.

### DESCRIPTION OF THE INVENTIVE EMBODIMENTS

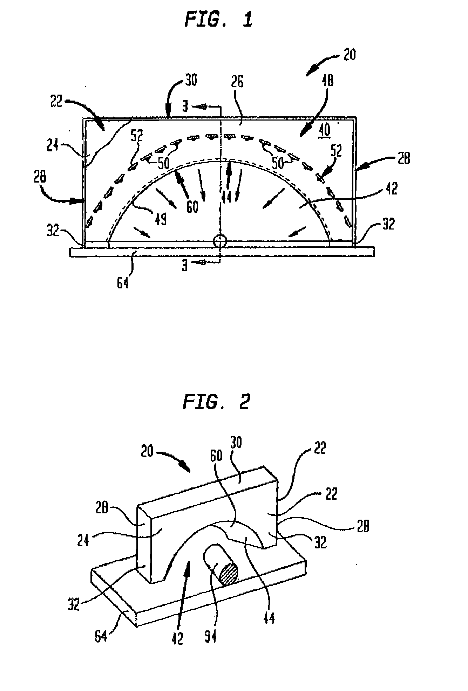

With respect to Figs 1 and 2 there is shown at 20 an illuminator incorporating the instant invention and including a housing 22 fabricated with a front panel 24 , a rear panel 26 (Fig. 1), a pair of spaced side panels 28 (Figs. 1 & 2), a top panel 30, and a pair of spaced bottom legs 32 (Fig. 1). All assembled together to provide an interior space 40. Front panel 24 and rear panel 26 are each substantially rectangular and each includes a semi-circular section 42, extending from an edge into the panel, removed therefrom, to provide a semi-circular curved edge surface 44 thereon. When housing 22 is assembled the edges of the front panel 24 and rear panel 26 is disposed so that sections 42 and semi-circular curved edges 44 are aligned. Sections 42 may be removed from substantially rectangular panels from which front panel 24 and rear panel 26 are formed or may be otherwise fabricated.

An illumination source 48, in this instance consisting of a plurality of LED's 50 is provided for illuminator 20. LED's 50 are disposed within interior space 40 of housing 22. LED's 50 are mounted in spaced relationship, in strip-like configuration, on a suitable backing or support (not shown) that is conventionally secured within interior space 40 of housing 22 so that LED's 50 are arranged in a semi-circular array along an arc circle 52 (Fig. 1), substantially parallel to curved edge surfaces 44, but spaced into and within housing 22 from edge surfaces 44. Alternatively an electro luminescent strip (not shown) may be utilized as the illumination source instead of the array of LED's 50. Suitable and conventional electrical connections (not shown) are provided for LED's 50 to connect it for use and to connect LED's 50 to a suitable and conventional source of power.

A diffuser 60, of substantially conventional material, is disposed between front panel 24 and rear panel 26 proximate edge surfaces 44 thereof and so as to receive illumination from LED's 50 and diffuse such illumination.

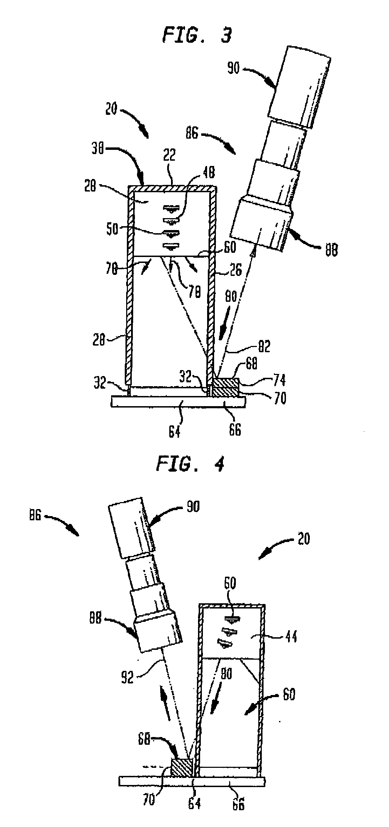

When illuminator 20 is to be used, housing 22 is placed upon a suitable surface, such as a table or workbench top 64 (Figs 1-4) and a part to be imaged is either placed on top 64 or a suitable part holder 66. The illumination from LED's 50 first passes through diffuser 60 and upon passing through diffuser 60 is diffused thereby. The resulting diffuse illumination 78 (Fig. 3) emanates in all directions. A sufficient portion 80 of illumination 78, however, is projected towards and onto cylindrical surface 68 of part 70, or other article, when the center axis of part, or other article, 70 is co-linear with a center line 74 of arc circle 52 along which LED's 50 are disposed.

An image capture arrangement 86 (Fig. 3), which includes at least a lens 88 and a camera 90 is disposed and suitably mounted to receive light rays 92 reflected from cylindrical surface 68 of part 70. Light rays 92 are thus directed to camera 90 for further use and interpretation by conventionally available programs and equipment. Suitable and conventional electrical circuitry connects the lens/camera combination arrangement to a computer or controller (not shown) with software to decode or otherwise utilize the output of the lens/camera combination arrangement.

The above described illuminator 20 and image capture arrangement 86 provide a uniform lighting 78, 80, 82 to cover up to 180 degrees (180[deg.]) of the surface 68 of a part, or other article, 70 such that light rays 82 reflect off part 70 and back to the camera/lens combination 90/88 resulting in a uniform, "even" image. Maintaining a diffused brightfield which results in, 1) a high contrast between any symbology, such as a date code or data matrix 94 (Fig. 2) when disposed on surface 68 of part 70, and cylindrical surface 68 of part 70; and 2) elimination of unwanted specular reflections. This illumination offers a wide semicircle of diffused light and is situated just off to the side of the target. The image capture arrangement 86 is to be positioned such that light 82 is reflected to camera 90 at the same angle as the incident light (Figure 3). Because the illumination surface is wide and diffused, this angle has a degree of variability allowing some flexibility in camera positioning while still maintaining the brightfield lighting effect.

The resulting illumination from illuminator 20will provide the widest possible solid angle of illumination, about 180° along the circumference of part 70. If the distance between the illuminator and part or article is increased, the solid angle of illumination will decrease. This will illuminate less of the target's curved surface, but will still be suitable for certain applications. Diffuse illumination from illumination source 48 is to be directed to a center line through an article or part at a center line of the arc circle of the illumination source and, as such, will properly illuminate the curved circular surface of the article or part.

Illuminator 20 achieves a small footprint by virtue of its arch like shape which illuminates the target through up to 180° of its curved axis. It avoids the excess illuminated area that would be required to illuminate additional planes (e.g. cylinder ends or a spherical object). This arch shape provides a reduction in overall dimensions for illuminators designed to address targets with curved surfaces. Therefore, illuminator 20 eliminates and renders unnecessary items such as dual light sources, beam splitters, reflecting domes and light blocks otherwise preset in conventionally available CDI's.

Illuminator 20 relies on an assortment of LEDs or other distributed light sources placed along an arch behind a curved diffuser so as to evenly dissipate light. As the resulting diffused light illuminates the cylinder surface very evenly, any aberration of the surface by print, deposit or indentation will reflect light away from the eye of the camera and will show as a darker element along the surface. This will provide the contrast necessary for the vision algorithms to decipher the characters and or to identify imperfections. Since the camera and lens combination can be totally independent from the illumination, many different cameras and computer configurations can be used including "smart cameras".

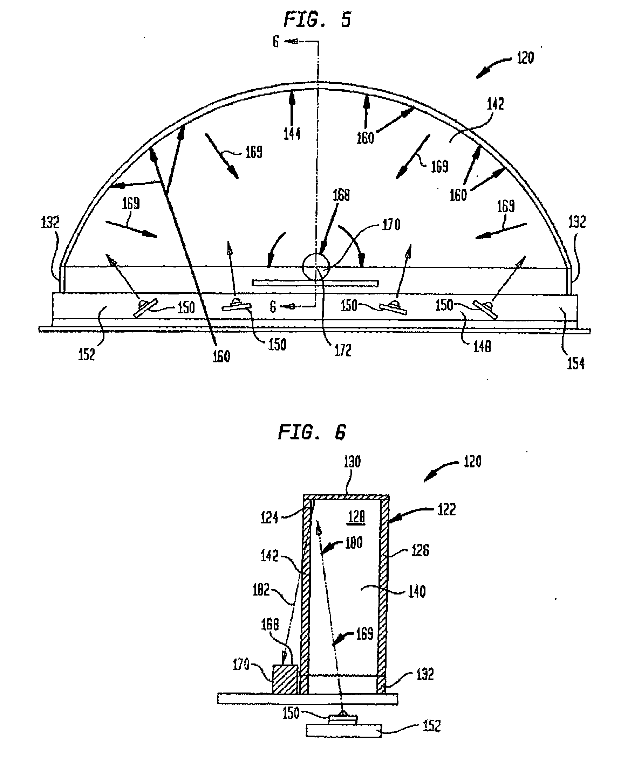

With respect to Figs 5 and 6 there is shown at 120 an alternate embodiment of illuminator, incorporating the instant invention, and including a housing 122 (Fig. 5) fabricated in a manner similar to housing 20 of the embodiment of Figs. 1-3. Housing 122 includes a front panel 124, a rear panel 126, a pair of spaced side panels 128 a top panel 130, and a pair of spaced bottom legs 132 all assembled together to provide an interior space 140. Front panel 124 and rear panel 126 are each substantially rectangular and each includes a semi-circular section 142 (Fig. 5) similar to section 42 of the Figs 1-3 embodiment, extending from an edge into the panel removed therefrom to provide a semi-circular curved edge surface 144 (Fig. 5). When housing 122 is assembled the edges of the front panel 124 and rear panel 126 is disposed so that sections 142 and semi-circular curved edges 144 are aligned. Sections 142 may be removed from substantially rectangular panels from which front panel 124 and rear panel 126 is formed or may be otherwise fabricated.

An illumination source 148, in this instance consisting of a plurality of LED's 150 is provided for illuminator 120. LED's 150 are suitably carried by an illumination carrier 152 to be disposed either within an illumination space 154 of carrier 152 of housing 122; or as a fabrication separate from housing 122 but fabricated to be disposed beneath housing 122 as shown in Figs 5 and 6. LED's 150 are mounted in spaced relationship, in strip-like configuration, on a suitable backing or support (not shown) that is conventionally secured within interior space 154 of carrier 152. LED's 150 are each arranged so that their respective illuminations are directed towards one or more diffuse reflectors 160, suitably secured within housing 122, to receive such illumination and reflect diffuse illumination 169 towards the surface 168 of a part, or other article, 170 disposed at a center axis 172 of opening edge 144. Alternatively an electro luminescent strip (not shown) may be utilized as the illumination source instead of the array of LED's 150. Suitable and conventional electrical connections (not shown) are provided for LED's 150 and/or electro luminescent strip to connect it for use and to connect it to a suitable and conventional source of power; as well as for a suitable and conventional lens/camera combination similar to that shown and described for the embodiment of Figs 1-3 and to a computer, controller or to a "smart camera".

In the Figs. 5 and 6 embodiment illumination 180 is directed to and impinge upon diffuse reflectors 160 and at least a portion of the diffuse illumination 182 reflected therefrom impinges upon cylindrical surface 168 of part 170 and therefrom to an image capture arrangement as shown and described above for the embodiment of Figs 1-3.

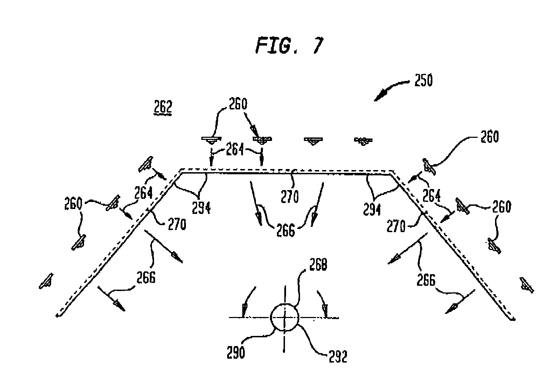

With respect to Fig. 7 there is shown at 250 an alternative illumination source including a plurality of LED's 260 suitably carried by an illumination carrier 262 and disposed within a housing similar to housing 22 of the embodiment of Figs. 1-3. LED's 260 are mounted in spaced relationship, as shown in Fig. 7, and in strip-like configuration, on a suitable backing or support (not shown) that is conventionally secured within an interior space of the housing. LED's 260 are, furthermore, disposed and arranged so that their respective illuminations 264 are directed towards one or more diffusers 270 suitably secured within the housing to receive such illumination. Diffusers 270, in turn, permit projection of diffuse illumination 266 towards the surface 288 of a part, or other article, 290 disposed at a center axis 292 of an opening 294 of the housing. Alternatively an electro luminescent strip (not shown) may be utilized as the illumination source instead of the array of LED's 260. Suitable and conventional electrical connections (not shown) are provided for LED's 260 and/or electro luminescent strip to connect them for use and to connect them to a suitable and conventional source of power.

It should be noted that in the embodiment of Fig. 7 the housing opening is formed by relatively straight edges 294 configured and positioned to correspond to the configuration and layout of LED's 260, or alternatively the electro luminescent strip. Furthermore in the Fig. 7 embodiment at least a portion of the diffuse illumination 266 impinges upon cylindrical surface 288 of part 290 and therefrom to an image capture arrangement as shown and described above for the embodiments of Figs 1-3 and 5-6.

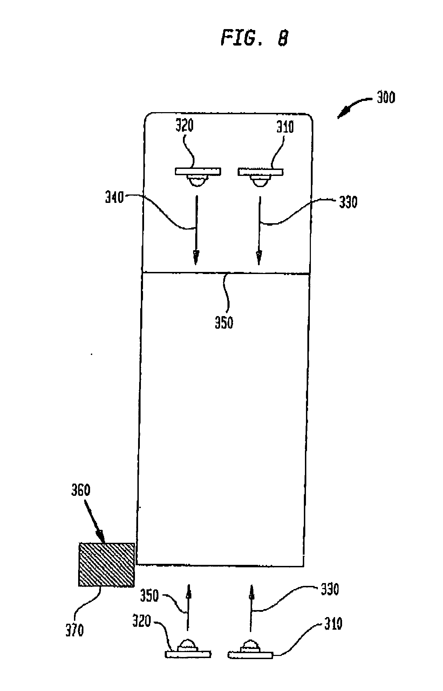

An illumination source 300, [Fig.8] is directed to yet another embodiment of the instant invention. In this instance it consists of a first plurality of LED's 310 and a second plurality of LED's 320; each aligned to project illumination 330 and 340, respectively, towards a diffuser 350.
Diffuser 350 functions in the same manner as the diffusers of the previously described embodiments wherein at least a portion of the diffused illumination is directed towards a circular surface 360 of a part, or article, 370. Illumination reflected off of circular surface of part 370 is thereafter directed to a lens and camera arrangement as described for the previous embodiments. It should be understood that alternative illumination sources such as electro luminescent strips maybe substituted for either LED's 310 or 320 or both. While two sects of illumination sources have been shown three or more may also be utilized.

While the above embodiments have been shown and described as including a housing it should be understood that a housing is not necessary for the illuminator to perform its functions. Other illumination geometry can be achieved by using fixturing to arrange and maintain the relationships between the illumination components.

The above described illuminators of the embodiments of Figs 5-6 and Fig. 7 also provide a uniform lighting to cover up to 180 degrees (180°) of the surface of a part such that light rays reflect off the part and back to the camera/lens combination resulting in a uniform, "even" image. Maintaining diffused brightfield results in, 1) a high contrast between any symbology, such as a date code or data matrix (not shown) when disposed on the part surface; and 2) elimination of unwanted specular reflections. This illumination offers a wide semicircle of diffused light and can be situated just off to the side of the target or also just above the target. The image capture arrangement is to be positioned such that light is reflected to a camera at the same angle as the incident light. Because the illumination surface is wide and diffused, this angle has a degree of variability allowing some flexibility in camera positioning while still maintaining the brightfield lighting effect.

The resulting illumination will provide the widest possible solid angle of illumination, about 180° along the circumference of the part. If the distance between the illuminator and part, or other article, 70 is increased, the solid angle of illumination will decrease. This will illuminate less of the target's curved surface, but will still be suitable for certain applications.

The above described illuminators of the embodiments of Figs. 5-6 and Fig. 7 each achieve a small footprint by virtue of its arch like shape which illuminates the target through up to 180[deg.] of its curved axis. It avoids the excess illuminated area that would be required to illuminate additional planes (e.g. cylinder ends or a spherical object). This arch shape provides a reduction in overall dimensions for illuminators designed to address targets with curved surfaces. Therefore, these illuminators also eliminate and render unnecessary items such as dual light sources, beam splitters, reflecting domes and light blocks otherwise present in conventionally available CDPs. These Illuminators rely on an assortment of LEDs or other distributed light sources placed so as to evenly project diffuse light. As the resulting diffused light illuminates the cylinder surface very evenly, any aberration of the surface by print, deposit or indentation will reflect light away from the eye of the camera and will show as a darker element along the surface. This will provide the contrast necessary for the vision algorithms to decipher the characters and or to identify imperfections. Since the camera and lens combination can be totally independent from the illumination, many different cameras and computer configurations can be used including "smart cameras".

It is understood that although there has been shown and described preferred embodiments of this invention that various modifications may be made in the details thereof without departing from the scope as comprehended by the following claims.

## Claims

1. An illuminator (20), for diffuse illumination of a cylindrical surface (68) of an article (70) when the article (70) is disposed for coaction with the illuminator (20), comprising:
a. a source of diffuse illumination (48, 60);
b. said source of diffuse illumination (48, 60) including at least a source of illumination (48) and a diffuser arrangement (60) disposed to coact with each other to provide diffuse illumination;
c. said source of diffuse illumination (48, 60) projecting at least a portion of said diffuse illumination towards an article illumination location (66) whereat a center line through the article (70) having the cylindrical surface (68) to be illuminated, when so disposed, will be co-linear with an imaginary center line at which said portion of said diffuse illumination is to be directed; **characterized by** the diffuser arrangement (60) being situated off to the side of the article illumination location (66) along the imaginary center line at which said portion of said diffuse illumination is to be directed;
d. a housing (22) to accommodate said diffuser arrangement (60), the housing (22) having a housing opening (42);
wherein the housing opening (42) allows that at least a portion of illumination reflected off of the cylindrical surface (68) of the article (70), when the article (70) is located at said article illumination location (66), can be received and captured by an image capture arrangement (86) disposed outside of the housing (22).

2. The illuminator (20) of claim 1, wherein said diffuser arrangement (60) being disposed at a predetermined location within said housing (22).

3. The illuminator (20) of claim 2, wherein said source of illumination (48) is disposed within said housing (22) at a location to project illumination through said diffuser arrangement (60).

4. The illuminator (20) of claim 2, wherein said source of illumination (48) is disposed at a location to project illumination upon said diffuser arrangement (60) to be reflected therefrom and towards the article (70) when located at said article illumination location (66).

5. The illuminator (20) of claim 2, wherein said source of illumination (48) includes
a plurality of illumination devices (50) spaced from each other in at least a single strip-like arrangement and disposed in a semi-circular arc with an imaginary centerline that is co-linear with the imaginary center line through the article (70) when the article (70) is located at the article illumination location (66).

6. The illuminator (20) of claim 5, wherein said illumination devices (50) are light emitting diodes otherwise known as LED's.

7. The illuminator (20) of claim 5, wherein said illumination devices (50) constitute an electro luminescent strip.

8. The illuminator (20) of claim 5, wherein said illumination devices (50) are arranged in at least a pair of strips disposed parallel to each other.

9. An imager for imaging a cylindrical surface (68) of an article (70), comprising:
a. an illuminator (20) according to claim 1 comprising a diffuser arrangement (60) and a housing (22); and said source of diffuse illumination projecting at least a portion of diffuse illumination towards an article illumination location (66);
b. the article illumination location (66) situated off to the side of the diffuser arrangement (60) along an imaginary center line at which said portion of said diffuse illumination is to be directed;
c. an image capture arrangement (86) disposed outside the housing (22) of the illuminator (20) to receive and capture at least a portion of illumination when reflected off of the cylindrical surface (68) of the article (70), when the article (70) is located at said article illumination location (66); and
d. an image decoding and utilization system disposed to decode and otherwise interpret the image data captured by said lens and camera arrangement (86).

10. A method of providing illumination, for providing diffuse illumination for a cylindrical surface (68) of an article (70) when the article (70) is disposed to receive such diffuse illumination, comprising;
a. providing a source of diffuse illumination (48, 60);
b. providing said source of diffuse illumination (48, 60) with at least a source of illumination (48) and a diffuser arrangement (60);
c. disposing said source of illumination (48) and said diffuser arrangement (60) to coact with each other to provide diffuse illumination;
d. providing a housing (22) for said diffuser arrangement (60), wherein the housing (22) comprises a housing opening (42);
e. providing an article illumination location (66);
f. projecting at least a portion of said diffuse illumination towards said article illumination location (66); and
g. locating the article (70) with the cylindrical surface (68) to be illuminated at said article illumination location (66) so that a center line through the article (70), when so disposed, will be co-linear with an imaginary center line at which said portion of said diffuse illumination is to be directed;
wherein the diffuser arrangement (60) is situated off to the side of the article illumination location (66) along the imaginary center line at which said portion of said diffuse illumination is to be directed; and
wherein the housing opening (42) allows that at least a portion of illumination reflected off of the cylindrical surface (68) of the article (70), when the article (70) is located at said article illumination location (66), can be received and captured by an image capture arrangement (86) disposed outside of the housing (22).

11. The method of claim 10 including:
a. forming said source of illumination (48) with a plurality of illumination devices (50);
b. spacing each of said illumination devices (50) at least a single strip-like arrangement; and
c. disposing said illumination devices (50) in a semi-circular arc with an imaginary center line that is co-linear with the imaginary center line through the article (70) when the article (70) is located at the article illumination location (66).

## Patentansprüche

1. Ein Beleuchtungsgerät (20) für die diffuse Beleuchtung einer zylindrischen Oberfläche (68) von einem Gegenstand (70), wenn der Gegenstand (70) zum Zusammenwirken mit dem Beleuchtungsgerät (20) angeordnet ist, mit:
a. einer Quelle für diffuse Beleuchtung (48,60);
b. besagter Quelle für diffuse Beleuchtung (48,60), die zumindest eine Quelle für Beleuchtung (48) und eine Diffuseranordnung (60) beinhaltet, angeordnet um miteinander zusammenzuwirken, um diffuse Beleuchtung bereitzustellen;
c. wobei besagte Quelle für diffuse Beleuchtung (48,60) zumindest einen Anteil der besagten diffusen Beleuchtung auf einen Gegenstandsbeleuchtungsbereich (66) projiziert, wobei eine Mittelachse durch den Gegenstand (70), dessen zylindrische Oberfläche (68) zu beleuchten ist, wenn derart angeordnet, kolinear zu einer imaginären Mittelachse ist, an die besagter Anteil der diffusen Beleuchtung zu leiten ist;
**gekennzeichnet durch** die Diffusoranordnung (60), die sich abseits des Gegenstandsbeleuchtungsbereichs (66) befindet, entlang der imaginären Mittelachse, an die besagter Anteil der diffusen Beleuchtung zu leiten ist;
d. ein Gehäuse (22), um besagte Diffuseranordnung (60) unterzubringen, dabei hat das Gehäuse (22) eine Gehäuseöffnung (42);
wobei die Gehäuseöffnung (42) es ermöglicht, dass zumindest ein Anteil der reflektierten Beleuchtung von der zylindrischen Oberfläche (68) des Gegenstands (70), wenn sich der Gegenstand (70) an besagtem Gegenstandsbeleuchtungsbereich (66) befindet, **durch** eine außerhalb des Gehäuses (22) angeordnete Bildaufnahmeanordnung (86) empfangen und erfasst werden kann.

2. Das Beleuchtungsgerät (20) von Anspruch 1, wobei besagte Diffuseranordnung (60) an einem vorbestimmten Bereich innerhalb des besagten Gehäuses (22) angeordnet ist.

3. Das Beleuchtungsgerät (20) von Anspruch 2, wobei sich besagte Quelle für Beleuchtung (48) innerhalb des besagten Gehäuses (22) in einem Bereich befindet, um Beleuchtung durch besagte Diffuseranordnung (60) zu projizieren.

4. Das Beleuchtungsgerät (20) von Anspruch 2, wobei besagte Quelle für Beleuchtung (48) in einem Bereich angeordnet ist, um Beleuchtung auf besagte Diffuseranordnung (60) zu projizieren, die von dort auf den Gegenstand (70), wenn an er sich an besagtem Gegenstandsbeleuchtungsbereich (66) befindet, reflektiert wird.

5. Das Beleuchtungsgerät (20) von Anspruch 2, wobei besagte Quelle für Beleuchtung (48) eine Pluralität an Beleuchtungsvorrichtungen (50) aufweist, die voneinander zumindest in einer streifenartigen Anordnung beabstandet sind und in einem halbkreisförmigen Bogen mit einer imaginären Mittelachse, die kolinear zur imaginären Mittelachse durch den Gegenstand (70) angeordnet ist, wenn sich der Gegenstand (70) in dem Gegenstandsbeleuchtungsbereich (66) befindet.

6. Das Beleuchtungsgerät (20) von Anspruch 5, wobei besagte Beleuchtungsvorrichtungen (50) lichtemittierende Dioden, auch bekannt als LEDs, sind.

7. Das Beleuchtungsgerät (20) von Anspruch 5, wobei besagte Beleuchtungsvorrichtungen (50) aus einem elektrolumineszierenden Streifen bestehen.

8. Das Beleuchtungsgerät (20) von Anspruch 5, wobei besagte Beleuchtungsvorrichtungen (50) in zumindest einem parallel zueinander angeordneten Paar von Streifen ausgerichtet sind.

9. Ein Bildwandler zum Abbilden einer zylindrischen Oberfläche (68) von einem Gegenstand (70) mit:
a. einem Beleuchtungsgerät (20) gemäß Anspruch 1 mit einer Diffuseranordnung (60) und einem Gehäuse (22); wobei besagte Quelle für diffuse Beleuchtung zumindest einen Anteil der diffusen Beleuchtung auf einen Gegenstandsbeleuchtungsbereich (66) projiziert;
b. dem Gegenstandsbeleuchtungsbereich (66), der sich abseits der Diffusoranordnung (60) befindet, entlang einer imaginären Mittelachse, auf die besagter Anteil der diffusen Beleuchtung zu leiten ist;
c. einer Bildaufnahmeanordnung (86), die sich außerhalb des Gehäuses (22) des Beleuchtungsgerätes (20) befindet, um zumindest einen Anteil der Beleuchtung zu empfangen und erfassen, wenn sie von der zylindrischen Oberfläche (68) des Gegenstands (70) wegreflektiert wird, wenn sich der Gegenstand (70) an besagtem Gegenstandsbeleuchtungsbereich (66) befindet; und
d. einem Bilddekodier- und Nutzungssystem, angeordnet um die durch besagte Linsen- und Kameraanordnung (86) erfassten Bilddaten zu dekodieren und andererseits zu interpretieren.

10. Ein Verfahren zum Bereitstellen von Beleuchtung, zum Bereitstellen diffuser Beleuchtung für eine zylindrische Oberfläche (68) von einem Gegenstand (70), wenn der Gegenstand (70) derart angeordnet ist, diese diffuse Beleuchtung zu empfangen, mit den Schritten:
a. Bereitstellen einer Quelle für diffuse Beleuchtung (48,60);
b. Bereitstellen besagter Quelle für diffuse Beleuchtung (48,60) mit zumindest einer Quelle für Beleuchtung (48) und einer Diffuseranordnung (60);
c. Anordnen besagter Quelle für Beleuchtung und besagter Diffuseranordnung (60), so dass sie zusammenwirken, um diffuse Beleuchtung bereitzustellen;
d. Bereitstellen eines Gehäuses (22) für besagte Diffuseranordnung (60), wobei das Gehäuse (22) eine Gehäuseöffnung (42) beinhaltet;
e. Bereitstellen eines Gegenstandsbeleuchtungsbereichs (66);
f. Projizieren zumindest eines Anteils besagter diffuser Beleuchtung auf besagten Gegenstandsbeleuchtungsbereich (66); und
g. Anordnen des Gegenstands (70) mit der zylindrischen Oberfläche (68), um an besagtem Gegenstandsbeleuchtungsbereich (66) beleuchtet zu werden, so dass eine Mittelachse durch den Gegenstand (70), wenn derart angeordnet, kolinear zu einer imaginären Mittelachse ist, an die besagter Anteil der diffusen Beleuchtung zu leiten ist;
wobei die Diffuseranordnung (60) sich abseits des Gegenstandsbeleuchtungsbereichs (66) befindet, entlang der imaginären Mittelachse, an die besagter Anteil der diffusen Beleuchtung zu leiten ist; und
wobei die Gehäuseöffnung (42) es ermöglicht, dass zumindest ein Anteil der reflektierten Beleuchtung von der zylindrischen Oberfläche (68) des Gegenstands (70), wenn sich der Gegenstand (70) an besagtem Gegenstandsbeleuchtungsbereich (66) befindet, durch eine außerhalb des Gehäuses (22) angeordnete Bildaufnahmeanordnung (86) empfangen und erfasst werden kann.

11. Das Verfahren von Anspruch 10, aufweisend;
a. Ausbilden besagter Quelle für Beleuchtung (48) mit einer Pluralität an Beleuchtungsvorrichtungen (50);
b. Beabstanden jeder der besagten Beleuchtungsvorrichtungen (50) in zumindest einer streifenartigen Anordnung; und
c. Anordnen besagter Beleuchtungsvorrichtungen (50) in einem halbkreisförmigen Bogen mit einer imaginären Mittelachse, die kolinear zur imaginären Mittelachse durch den Gegenstand (70) ist, wenn sich der Gegenstand (70) in einem Gegenstandsbeleuchtungsbereich (66) befindet.

## Revendications

1. Dispositif d'éclairage (20), pour l'éclairage diffus d'une surface cylindrique (68) d'un article (70) lorsque l'article (70) est disposé pour une action conjointe avec le dispositif d'éclairage (20), comprenant :
a. une source d'éclairage diffus (48, 60) ;
b. ladite source d'éclairage diffus (48, 60) comprenant au moins une source d'éclairage (48) et un agencement de diffuseur (60) disposés de façon à agir conjointement entre eux afin de délivrer un éclairage diffus ;
c. ladite source d'éclairage diffus (48, 60) projetant au moins une partie dudit éclairage diffus vers un emplacement d'éclairage d'article (66), sur quoi une ligne centrale traversant l'article (70) comportant la surface cylindrique (68) devant être éclairée, lorsqu'il est ainsi disposé, sera colinéaire avec une ligne centrale imaginaire au niveau de laquelle ladite partie dudit éclairage diffus doit être dirigée ;
**caractérisé en ce que** l'agencement de diffuseur (60) est situé de façon décalée vers le côté de l'emplacement d'éclairage d'article (66) le long de la ligne centrale imaginaire sur laquelle ladite partie dudit éclairage diffus doit être dirigée ;
d. un boîtier (22) pour loger ledit agencement de diffuseur (60), le boîtier (22) comportant une ouverture de boîtier (42) ;
dans lequel l'ouverture de boîtier (42) permet qu'au moins une partie de l'éclairage réfléchi à partir de la surface cylindrique (68) de l'article (70), lorsque l'article (70) est situé audit emplacement d'éclairage d'article (66), puisse être reçue et capturée par un agencement de capture d'image (86) disposé à l'extérieur du boîtier (22).

2. Dispositif d'éclairage (20) selon la revendication 1, dans lequel ledit agencement de diffuseur (60) est disposé en un emplacement prédéterminé à l'intérieur dudit boîtier (22).

3. Dispositif d'éclairage (20) selon la revendication 2, dans lequel ladite source d'éclairage (48) est disposée à l'intérieur dudit boîtier (22) en un emplacement destiné à projeter un éclairage par l'intermédiaire dudit agencement de diffuseur (60).

4. Dispositif d'éclairage (20) selon la revendication 2, dans lequel ladite source d'éclairage (48) est disposée en un emplacement destiné à projeter un éclairage sur ledit agencement de diffuseur (60) de telle sorte qu'il soit réfléchi à partir de celui-ci et vers l'article (70) lorsqu'il est disposé audit emplacement d'éclairage d'article (66).

5. Dispositif d'éclairage (20) selon la revendication 2, dans lequel ladite source d'éclairage (48) comprend :
une pluralité de dispositifs d'éclairage (50) espacés les uns des autres dans au moins une configuration en forme de bande unique et disposés selon un arc semi-circulaire avec une ligne centrale imaginaire qui est colinéaire à la ligne centrale imaginaire traversant l'article (70) lorsque l'article (70) est situé à l'emplacement d'éclairage d'article (66).

6. Dispositif d'éclairage (20) selon la revendication 5, dans lequel lesdits dispositifs d'éclairage (50) sont des diodes électroluminescentes, autrement connues sous le nom de DEL.

7. Dispositif d'éclairage (20) selon la revendication 5, dans lequel lesdits dispositifs d'éclairage (50) constituent une bande électroluminescente.

8. Dispositif d'éclairage (20) selon la revendication 5, dans lequel lesdits dispositifs d'éclairage (50) sont disposés dans au moins une paire de bandes disposées parallèlement les unes aux autres.

9. Dispositif imageur pour imager une surface cylindrique (68) d'un article (70), comprenant :
a. un dispositif d'éclairage (20) selon la revendication 1, comprenant un agencement de diffuseur (60) et un boîtier (22) ; et ladite source d'éclairage diffus projetant au moins une partie d'un éclairage diffus vers un emplacement d'éclairage d'article (66) ;
b. l'emplacement d'éclairage d'article (66) étant situé de façon décalée vers le côté de l'agencement de diffuseur (60) le long d'une ligne centrale imaginaire sur laquelle ladite partie dudit éclairage diffus doit être dirigée ;
c. un agencement de capture d'image (86) disposé à l'extérieur du boîtier (22) du dispositif d'éclairage (20) de façon à recevoir et à capturer au moins une partie d'un éclairage lorsqu'il est réfléchi à partir de la surface cylindrique (68) de l'article (70), lorsque l'article (70) est situé audit emplacement d'éclairage d'article (66) ; et
d. un système de décodage et d'utilisation d'image disposé de façon à décoder, et, par ailleurs, à interpréter, les données d'image capturées par ledit agencement à lentilles et caméra (86).

10. Procédé de réalisation d'éclairage, pour délivrer un éclairage diffus pour une surface cylindrique (68) d'un article (70) lorsque l'article (70) est disposé de façon à recevoir cet éclairage diffus, comprenant le fait de :
a. fournir une source d'éclairage diffus (48, 60) ;
b. munir ladite source d'éclairage diffus (48, 60) d'au moins une source d'éclairage (48) et d'un agencement de diffuseur (60) ;
c. disposer ladite source d'éclairage (48) et ledit agencement de diffuseur (60) de façon à ce qu'ils agissent conjointement entre eux afin de délivrer un éclairage diffus ;
d. fournir un boîtier (22) pour ledit agencement de diffuseur (60), le boîtier (22) comprenant une ouverture de boîtier (42) ;
e. fournir un emplacement d'éclairage d'article (66) ;
f. projeter l'au moins une partie dudit éclairage diffus vers ledit emplacement d'éclairage d'article (66) ;
et
g. disposer l'article (70) avec la surface cylindrique (68) devant être éclairée audit emplacement d'éclairage d'article (66) de telle sorte qu'une ligne centrale traversant l'article (70), lorsqu'il est ainsi disposé, soit colinéaire à une ligne centrale imaginaire sur laquelle ladite partie dudit éclairage diffus doit être dirigée ;
dans lequel l'agencement de diffuseur (60) est situé de façon décalée vers le côté de l'emplacement d'éclairage d'article (66) le long de la ligne centrale imaginaire sur laquelle ladite partie dudit éclairage diffus doit être dirigée ; et
dans lequel l'ouverture de boîtier (42) permet qu'au moins une partie d'un éclairage réfléchi à partir de la surface cylindrique (68) de l'article (70), lorsque l'article est situé audit emplacement d'éclairage d'article (66), puisse être reçue et capturée par un agencement de capture d'image (86) disposé à l'extérieur du boîtier (22).

11. Procédé selon la revendication 10, comprenant le fait de :
a. former ladite source d'éclairage (48) avec une pluralité de dispositifs d'éclairage (50) ;
b. espacer chacun desdits dispositifs d'éclairage (50) en au moins une configuration en forme de bande unique ; et
c. disposer lesdits dispositifs d'éclairage (50) selon un arc semi-circulaire avec une ligne centrale imaginaire qui est colinéaire à la ligne centrale imaginaire traversant l'article (70) lorsque l'article (70) est situé à l'emplacement d'éclairage d'article (66).
